# EUROPEAN PATENT APPLICATION

(11) **EP 3 798 442 A1**
(43) Date of publication of application: **31.03.2021**
(21) Application number: 20168983.3
(22) Date of filing: 09.04.2020
(51) Int. Cl.: F03D 1/06, F03D 9/17, F03D 80/00

(54) **A WIND TURBINE AND METHOD OF GENERATING POWER FROM THE WIND**

(30) Priority: 27.09.2019 GB 201913985
(71) Applicant: Ogab Limited, Soothouse Spring St Albans AL3 6PF (GB)
(72) Inventor: Elogab, Osama, Taunton TA3 5QT (GB); Elogab, Zachary, Taunton TA3 5QT (GB)
(74) Representative: Handsome I.P. Ltd

(57) **Abstract**

The blades of conventional wind turbines almost always have adjustable pitch; that is, they can be pivoted about their length in order to change the angle of attack of the blades to the wind. This is necessary, because the effective angle of attack varies with both wind speed and rotational speed. In particular, in extremely high wind speeds, the blades can be 'feathered' to reduce the amount of torque being imparted to the turbine. The present invention provides a wind turbine in which pressurised air may be conveyed to air outlets 21 on the blades 1. In this way, the aerodynamic behaviour of the blade 1 may be controlled, effectively feathering the blade without needing a robust mechanical system for pivoting the blade.

## Description

The present invention relates generally to a wind turbine and a method of generating power from the wind and finds particular, although not exclusive, utility in high and low wind scenarios.

The blades of conventional wind turbines almost always have adjustable pitch; that is, they can be pivoted about their length in order to change the angle of attack of the blades to the wind. This is necessary, because the effective angle of attack varies with both wind speed and rotational speed. In particular, in extremely high wind speeds, the blades can be 'feathered' to reduce the amount of torque being imparted to the turbine.

According to a first aspect of the present invention, there is provided a wind turbine, comprising: a plurality of blades, each blade having an aerofoil profile and provided with a respective plurality of air outlets on a windward surface and leading edge thereof; an air distribution system for conveying air to each air outlet; and a pressurised air source configured to supply air to the air distribution system at a pressure above ambient pressure; and an air control system for controlling a pressure of air to be conveyed to each outlet.

In this way, using outlets on a turbine blade would change the aerodynamic behaviour of the blade (effectively feathering the blade without needing a robust mechanical system for pivoting the blade). In this way, a fixed-pitch turbine could be run when wind speeds would otherwise be too low, or too high. This could be useful in systems where the rotational speed of a wind turbine is required to be kept within fine tolerance, for example where direct electrical generation without frequency conversion is desired.

The supply of air to the outlets may reduce damage to the wind turbine blade caused by airborne particulates, for example dust, sand, grit and/or debris. The pressurised air conveyed to each of the plurality of outlets may prevent or hinder particulates from striking the wind turbine blade. In use, the blade has a higher orbital angular velocity at its tip, than has a portion of the blade distal from the blade's axis of rotation. Accordingly, the pressure of air conveyed to an outlet adjacent to the tip of the blade may be higher than the pressure of air conveyed to an outlet adjacent to the base of the blade; that is, a portion of the blade proximal to the blade's axis of rotation. The air pressure conveyed to each air outlet may be proportional to the square of the radial position along the blade of said air outlet (e.g. from the blade's rotation axis). The air pressure conveyed to each air outlet may be proportional to the square of the velocity of the blade at the position of said air outlet.

The wind turbine may be a horizontal axis wind turbine; however, vertical axis wind turbines such as the Darrieus wind turbine are also considered.

The plurality of blades may be two blades, three blades, four blades, five blades or more blades.

Each blade may comprise a wing shape and/or aerofoil. Profile may mean cross-section and/or perimeter.

Each of the respective plurality of air outlets may comprise a plurality of sub-outlets, for example an array of sub-outlets.

Placement of the outlets may be chosen to mitigate dust accumulation on the turbine blade, and/or to vary an effective (e.g. virtual) profile of the blade, and/or its pitch.

On the windward surface of each blade may mean on a surface of each blade configured to face towards the wind direction. On the leading edge of each blade may mean on an edge of the blade configured to face towards the direction of rotation. Therefore, the outlets may be arranged to face both toward the wind direction and toward the direction of rotation.

The air distribution system may comprise pipes, tubes or passages for air to flow therethrough.

The air control system may control air to each respective plurality of air outlets and/or each sub-outlet independently, and/or may control air to each respective plurality of air outlets together. For example, the air control system may convey air to a first blade only, followed by a second blade only, followed by a third blade only, followed by the first blade only, and so on. Alternatively, the air control system may convey air to first, second and third blades together.

The pressurised air source may comprise an air compressor, pressure vessel and/or some other source of pressurised air. Above ambient pressure may comprise at least 5%, 10%, 15%, 25%, 35%, 50%, 100% or more above atmospheric air pressure and/or ambient.

The pressurised air source may be configured to selectively control when to produce pressurised air and/or at what pressure to produce pressurised air. Alternatively, it may be configured to continuously produce pressurised air.

At least one of the plurality of air outlets may form part of an air amplifier.

The air amplifier may comprise a system such as that disclosed in granted US Patent US8,308,445, in which an interior passage leads to a mouth for ejecting air over a Coandǎ surface located adjacent to the mouth. The Coandǎ effect is already a proven, well documented method of entrainment whereby a primary air flow is directed over the Coandǎ surface. A description of the features of a Coandǎ surface, and the effect of fluid flow over a Coandǎ surface, can be found in articles such as Reba, Scientific American, Volume 214, June 1963 pages 84 to 92. In this way, air flow from the outlet entrains air surrounding the mouth, thereby acting as an air amplifier.

For example, the air amplifier could act to draw more air over the turbine blades, thereby increasing rotational speed.

The plurality of air outlets may comprise at least one nozzle. The outlet may be elongate; that is, substantially wider than tall, for example at least three times, five times, ten times and/or one hundred times. Alternatively, the outlet may be substantially circular, square and/or any other shape.

According to a second aspect of the present invention, there is provided a method of generating power from the wind, the method comprising the steps of: providing a wind turbine according to any preceding claim; and conveying air from a pressurised air source to the plurality of air outlets on a respective one of the blades.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

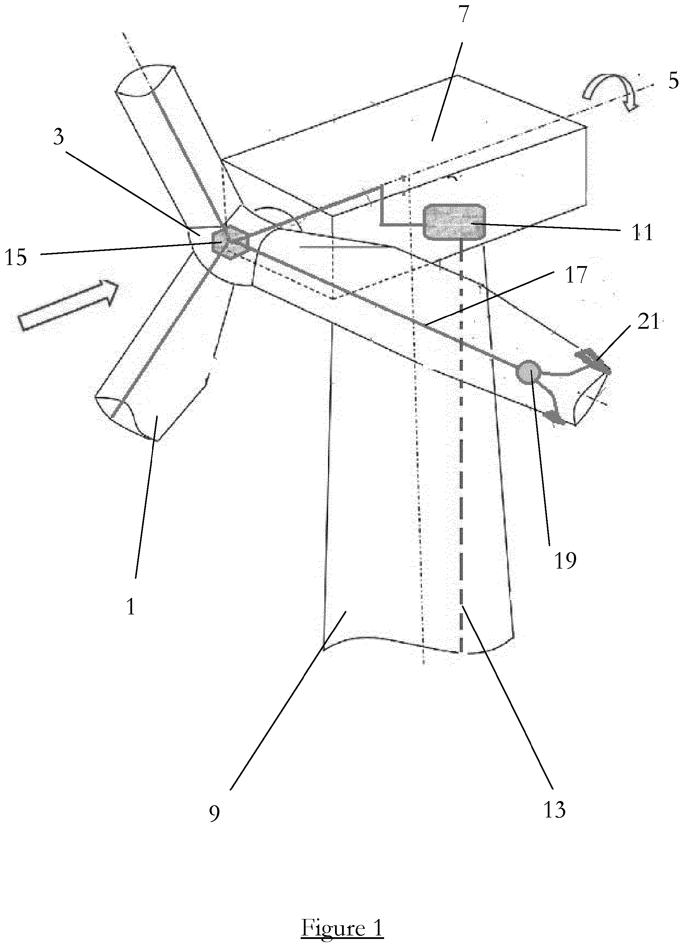

Figure 1 shows a wind turbine.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein. Likewise, method steps described or claimed in a particular sequence may be understood to operate in a different sequence.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other. For instance, wireless connectivity is contemplated.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any one embodiment or aspect of the invention may be combined in any suitable manner with any other particular feature, structure or characteristic of another embodiment or aspect of the invention, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances. The use of the term "any" may mean "all" and/or "each" in certain circumstances.

The principles of the invention will now be described by a detailed description of at least one drawing relating to exemplary features. It is clear that other arrangements can be configured according to the knowledge of persons skilled in the art without departing from the underlying concept or technical teaching, the invention being limited only by the terms of the appended claims.

Figure 1 shows a wind turbine, in which only the central portion of the blades 1 close to the hub 3 are shown for clarity. The hub 3 is free to rotate about an axis 5 passing through the nacelle 7, which is in turn supported on a tower 9.

Within the nacelle 7 may be the usual energy generation equipment; however, these are not shown for clarity. Also within the nacelle is shown a source of compressed air 11, such as an air compressor, which may be connected via line 13 to an electrical control system, power source, and/or further compressed air source (so that the source of compressed air 11 acts merely as an intermediate source, spaced from an original source, not shown).

The source of compressed air may supply compressed air to an air distribution instrument 15, which may be located in the hub 3 as shown or may be elsewhere, for controlling distribution of air down the blades 1 via passages 17 and valve 19 to outlets 21. The valve 19 may be configured to permit air flow to a subset of the available outlets to perform different modifications of the blades effective aerodynamic profile.

## Claims

1. A wind turbine, comprising:
a plurality of blades, each blade having an aerofoil profile and provided with a respective plurality of air outlets on a windward surface and leading edge thereof;
an air distribution system for conveying air to each air outlet;
a pressurised air source configured to supply air to the air distribution system at a pressure above ambient pressure; and
an air control system for controlling a pressure of air to be conveyed to each outlet.

2. The wind turbine of claim 1, wherein at least one of the plurality of air outlets may form part of an air amplifier.

3. A method of generating power from the wind, the method comprising the steps of:
providing a wind turbine according to any preceding claim; and
conveying air from a pressurised air source to the plurality of air outlets on a respective one of the blades.

## Amended claims

### Amended claims in accordance with Rule 137(2) EPC.

1. A wind turbine, comprising:
a plurality of blades (1), each blade (1) having an aerofoil profile and provided with a respective plurality of air outlets (21) on a windward surface and leading edge thereof;
an air distribution system (15) for conveying air to each air outlet;
a pressurised air source (11) configured to supply air to the air distribution system (15) at a pressure above ambient pressure; and
an air control system for controlling a pressure of air to be conveyed to each outlet;
**characterised in that** the pressure of air conveyed to an outlet (21) adjacent to the tip of the blade (1) is higher than the pressure of air conveyed to an outlet (21) adjacent to the base of the blade (1).

2. The wind turbine of claim 1, wherein at least one of the plurality of air outlets (21) may form part of an air amplifier.

3. A method of generating power from the wind, the method comprising the steps of:
providing a wind turbine according to any preceding claim; and
conveying air from a pressurised air source (11) to the plurality of air outlets (21) on a respective one of the blades (1).
